(19) **Europäisches Patentamt**

**European Patent Office**

**Office européen des brevets**

(11) Veröffentlichungsnummer: **0 224 245**
**A2**

(12) EUROPÄISCHE PATENTANMELDUNG

(21) Anmeldenummer: 86116369.9

(22) Anmeldetag: 25.11.86

(51) Int. Cl.⁴: **G01N 23/223**

(30) Priorität: 28.11.85 DE 3542003

(43) Veröffentlichungstag der Anmeldung:
03.06.87 Patentblatt 87/23

(84) Benannte Vertragsstaaten:
**DE FR GB NL**

(71) Anmelder: **GKSS Forschungszentrum Geesthacht GmbH**
**Max-Planck-Strasse**
**D-2054 Geesthacht(DE)**

(72) Erfinder: **Knoth, Joachim**
**Duwockskamp 14**
**D-2050 Hamburg 80(DE)**
Erfinder: **Schneider, Harald**
**Wandsbeker Ring 28**
**D-2054 Geesthacht(DE)**
Erfinder: **Schwenke, Heinrich**
**Fernsicht 4**
**D-2058 Escheburg(DE)**

(74) Vertreter: **Gottlob, Peter**
**Kernforschungszentrum Karlsruhe GmbH**
**Stabs. Patente und Lizenzen Weberstrasse 5**
**D-7500 Karlsruhe 1(DE)**

(54) **Verfahren zur zerstörungsfreien Analyse der Oberflächenschicht von Proben.**

(57) Die Erfindung betrifft ein Verfahren zur zerstörungsfreien Analyse der Oberflächenschicht von Proben auf ihre Elementzusammensetzung, bei der die Oberfläche mittels Röntgenstrahlung beaufschlagt und mit einem über der Probe befestigten Detektor spektrometrisch die von der Probe ausgehende Strahlung untersucht wird.

Die der Erfindung gestellte Aufgabe besteht darin, das Verfahren der e. g. Art derart zu gestalten, daß die Elementzusammensetzung der ebenen Oberflächen von z. B. massiven Proben quantitativ und zerstörungsfrei erfaßt werden kann.

Die Lösung ist dadurch gekennzeichnet, daß die die Elemente der Oberfläche anregende Röntgenstrahlung streifend unter einem Winkel kleiner als der Grenzwinkel der Totalreflexion auf die Oberfläche auftrifft und daß die von den Elementen ausgesandte Röntgenfluoreszenzstrahlung vom Detektor erfaßt wird.

Fig. 1

## Verfahren zur zerstörungsfreien Analyse der Oberflächenschicht von Proben.

Die Erfindung betrifft ein Verfahren zur zerstörungsfreien Analyse der Oberflächenschicht von Proben auf ihre Elementzusammensetzung, bei der die Oberfläche mittels Röntgenstrahlung beaufschlagt und mit einem über der Probe befestigten Detektor spektrometrisch die von der Probe ausgehende Strahlung untersucht wird.

Es ist zwar eine Meßanordnung bekannt (DE-AS 27 36 960), mit der eine Probe mit Röntgenstrahlung in einem flachen Winkel zum Probenträger bestrahlt und die von der Probe ausgehende Röntgenfluoreszenzstrahlung mittels eines Detektors spektrometrisch zwecks Elementbestimmungen untersucht wird. Allerdings wird bei dieser Meßanordnung die Anregungsstrahlung vom Probenträger - meist ein hochebener Quarzblock - vollständig reflektiert und die Röntgenfluoreszenzstrahlung geht von der Probe aus, die als Staubschicht oder Film als Rückstand einer verdampften Lösung auf den Probenträger aufgebracht wurde. Diese Präparationsmethode der Probe hatte ihren Sinn darin, daß sichergestellt werden sollte, daß die gemessene Elementzusammensetzung nur von einer dünnen Schicht stammt.

Andererseits wurden zur Charakterisierung von Festkörpern über die Eigenschaften ihrer Oberflächen Methoden benutzt, die erhebliche Schwierigkeiten aufweisen. So sind im Mat. Res. Soc. Symp. Proc. Vol. 36 (1985), Seiten 13 bis 18, die neuesten Methoden beschrieben, um diese Problematik zu lösen. Es handelt sich hierbei um die Neutronen-Aktivierungs-Analyse (INAA), die Atomabsorptions-Spektrophotometrie (AAS), die Voltametrie (VM) oder die "Deep Level Transient Spectroscopy" (DLTS). Die Probendicken liegen im Bereich von 381 μm, deren Oberflächen z. B. durch Abätzen oder Verdampfen mittels Elektronenbeschuß gezielt zu isolieren sind.

Die der Erfindung gestellte Aufgabe besteht darin, das Verfahren der e. g. Art derart zu gestalten, daß die Elementzusammensetzung der ebenen Oberflächen von z. B. massiven Proben quantitativ und zerstörungsfrei erfaßt werden kann.

Die Lösung ist in den kennzeichnenden Merkmalen des Anspruches 1 beschrieben.

Eine vorteilhafte Weiterbildung des erfindungsgemäßen Verfahrens ist im Anspruch 1 aufgezeigt.

Mit der Erfindung wird demnach eine technische Lösung angegeben, die es erlaubt, die physikalischen Effekte der Totalreflexion von Röntgenstrahlung an ebenen Oberflächen derart zu nutzen, daß die geringe Eindringtiefe der totalreflektierten Röntgenstrahlung von etwa 10 nm das Strahlungsfeld der einfallenden Röntgenstrahlung auf eben diese Oberflächenschicht begrenzt. Auf diese Weise werden ausschließlich die Atome der Oberfläche zur Aussendung von Fluoreszenzstrahlung angeregt. Die Fluoreszenzstrahlung kann mit Hilfe eines handelsüblichen Halbleiterdetektors leicht zur Identifizierung und Quantifizierung der Oberflächenatome herangezogen werden. Mit der erfindungsgemäßen Lösung wird also gleichzeitig eine extrem dünne Oberflächenschicht meßtechnisch isoliert und ihre Elementzusammensetzung erfaßt.

Als mögliche Einrichtung zur Durchführung des erfindungsgemäßen Verfahrens wird eine Anordnung (s. DE-AS 27 36 960) zur chemischen Analyse von Stäuben bzw. des Rückstandes verdampfbarer Lösungsmittel derart technisch modifiziert, daß die Totalreflexion der anregenden Röntgenstrahlung statt am Probenträger aus Quarzglas an der Oberfläche des zu untersuchenden Werkstücks auftritt.

Die Eindringtiefe der Röntgenstrahlung und damit die Tiefe der untersuchten Oberflächenschicht kann hierbei im Bereich von ca. 10 -100 nm unabhängig von der Dicke des Werkstücks durch Verstellen der bei dieser Einrichtung verwendeten Spiegel und Blendensysteme sowie der Röhrenhöhe erreicht werden.

Das wesentlich Neue der erfindungsgemäßen Lösung ist also darin zu sehen, daß der Effekt der Totalreflexion von Röntgenstrahlung mit Hilfe einer geeigneten Apparatur dazu genutzt wird, die Oberflächenschicht von Festkörpern -von ihrer Unterlage isoliert und zerstörungsfrei -auf ihre Elementzusammensetzung hin zu analysieren.

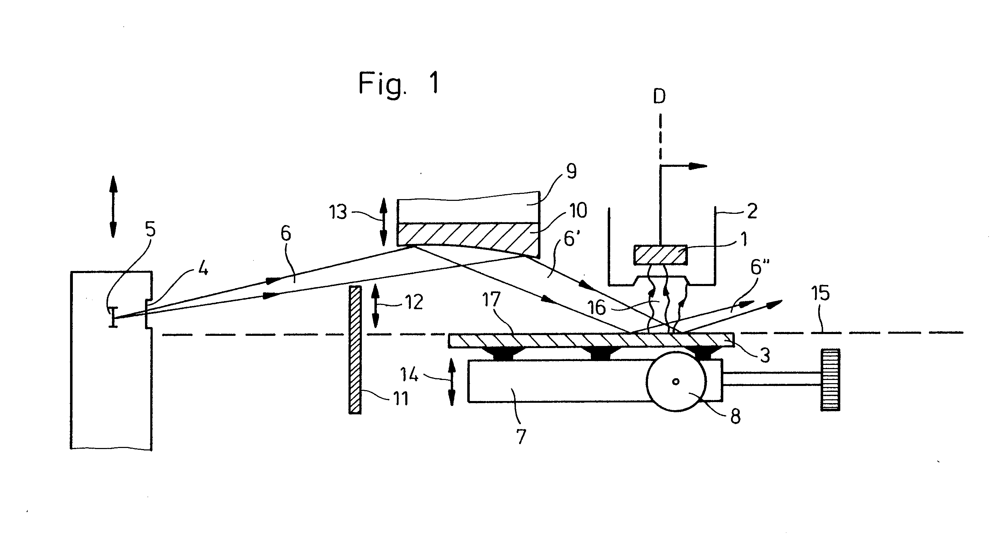

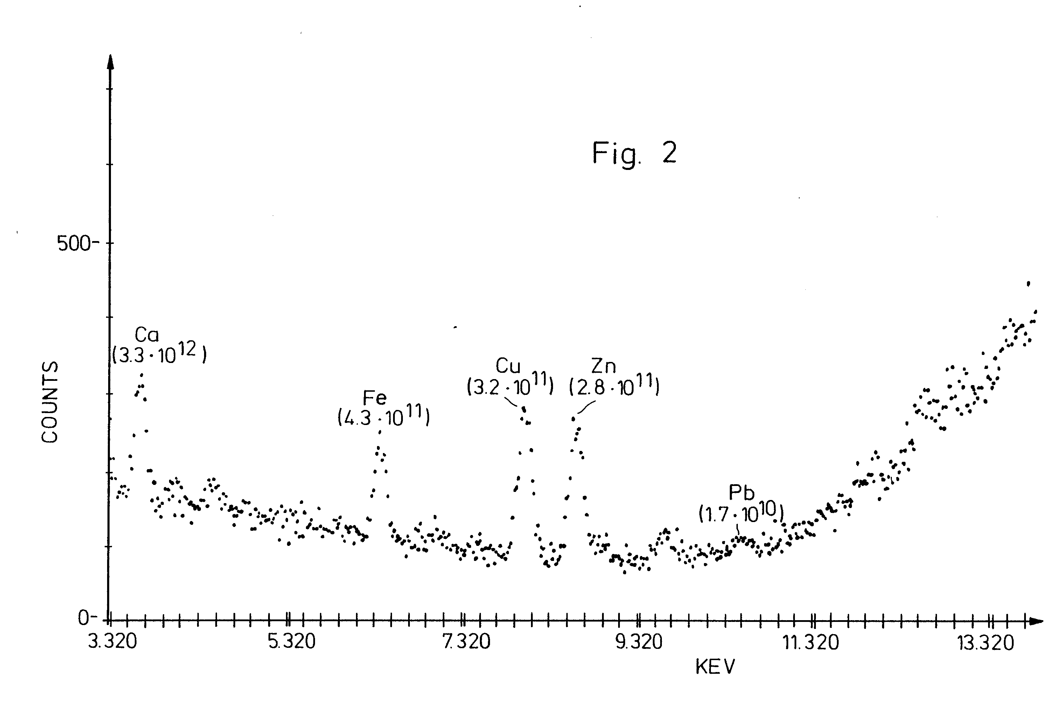

Die Erfindung wird im folgenden anhand einer Elementanalyse sowie einer dazu verwendeten Meßanordnung mittels der Fig. 1 und 2 näher erläutert.

Das Detektorsystem der Meßanordnung gem. Fig. 1 besteht in bekannter Weise aus einem Dewargefäß mit einem Detektor 1, z. B. einem SiLi-Detektor, einem Zählrohr oder einem NaJ-Kristall in einer auch der Ausrichtung der Detektorachse D dienenden justierbaren Halterung 2. Seitlich der Probe 3 befindet sich eine Röntgenstrahlungsquelle 5 mit einem Austrittsfenster 4 Röntgenstrahlenquelle 5 ist mit einer Justiervorrichtung versehen, welche die Möglichkeit gibt, die vertikale Achse der Röntgenröhre höhenmäßig und bezüglich der horizontalen Achse auszurichten. Innerhalb des Gehäuses befindet sicht, ausgerichtet zur Referenzebene 15 eine Positioniereinrichtung 7 für die Probe 3. Die Positioniereinrichtung 7 kann mit Hilfe eines von außen bedienbaren Antriebes 8 so bewegt werden, daß die Probe 3 auf die Detek torachse D ausgerichtet wird. Zwischen der Röntgenröhre 5 und der Probe 3 befindet sich ein vertikal nach oben ragender Lagerblock 9, der eine Reflektorplatte 10 trägt.

Wenn mit der Meßanordnung gearbeitet wird, ist die Röntgenröhre 5 einzuschalten, die dann durch das Fenster 4 einen Röntgenstrahl 6 hindurchschickt. Dieser Röntgenstrahl 6 erreicht an einer verstellbaren Blende 11 vorbei die Unterseite der Reflektorplatte 10 und wird dann nach unten umgelenkt, um die Oberfläche 17 der zu untersuchenden Probe 3 zu erreichen. Dadurch, daß der Röntgenstrahl 6 zunächst auf die Reflektorplatte 10 auftrifft, wird der hochenergetische Teil der Strahlung unterdrückt, d. h. er erreicht nicht mehr die eigentliche Meßebene. Wird beispielsweise eine Röntgenröhre mit Molybdänanode verwendet, dringt der Bremsstrahlungsanteil von mehr als 20 keV in die Reflektorplatte 10 ein, so daß er nicht mehr zur Probe 3 gelangen kann. Aufgrund dieser Aussonderung der hochenergetischen Strahlung kann die Röntgenröhre 5 jetzt in dem für die Strahlungsausbeute günstigsten Spannungsbereich betrieben werden. Wie die Pfeile 12 bis 14 zeigen, läßt sich der Strahlungsweg durch höhenmäßige und winkelmäßige Verstellung der Reflektorplatte 10, der Blende 11 und der Grundplatte 7 bezüglich der Referenzebene verändern, so daß sich dann beispielsweise ein Strahlungsgang 6, 6' und 6" ergibt. Zusätzlich ist auch noch die von der Probe 3 ausgehende Fluoreszenzstrahlung 16 angedeutet, die in den Detektor 1 hineingeht.

In der Fig. 2 ist eine Elementanalyse für die Metallspuren in der Oberfläche eines Si-Wafers dargestellt, wie sie nach dem erfindungsgemäßen Verfahren durchgeführt wurde. Über der Röntgenstrahlungsanregungsenergie in KEV sind die Zählimpulse aufgetragen, aus welchem Spektrum die Metallspuren von Ca, Fe, Cu, Zn sowie Pb mit ihren Konzentrationen in Atomen/cm² zu entnehmen sind.

## Ansprüche

1. Verfahren zur zerstörungsfreien Analyse der Oberflächenschicht von Proben auf ihre Elementzusammensetzung, bei der die Oberfläche mittels Röntgenstrahlung beaufschlagt und mit einem über der Probe befestigten Detektor spektrometrisch die von der Probe ausgehende Strahlung untersucht wird, dadurch gekennzeichnet, daß die die Elemente der Oberfläche (17) anregende Röntgenstrahlung (6 -6") unter Ausnutzung der Totalreflexion streifend auf die Oberfläche (17) einer massive Probe (3) auftrifft und daß die von den Elementen einer Oberflächenschicht von etwa 10 - 100 mm Dicke ausgesandte Röntgenfluoreszenzstrahlung (16) von Detektor (1) erfaßt wird.

2. Verfahren nach Anspruch 1, dadurch gekennzeichnet, daß der Winkel den die anregende Strahlung (6") mit dem Lot auf die plane Oberfläche (17) einschließt, mittels eines im Strahlengang (6 -6") der anregenden Strahlung angeordneten Reflektors (10), mittels Blenden (11) und/oder durch Verstellung der Röhre (5) variiert wird.

Fig. 1

0 224 245

PLA 8567

Fig. 2